# EUROPEAN PATENT SPECIFICATION

(11) **EP 4 357 315 B1**
(45) Date of publication and mention of the grant of the patent: **08.07.2026**
(21) Application number: 23203127.8
(22) Date of filing: 12.10.2023
(51) Int. Cl.: C04B 28/02, C04B 40/02, B28B 11/04, C04B 41/00, C04B 41/50, C04B 111/27

(54) **ECOLOGICAL DIPPED FACING BRICK**
ÖKOLOGISCHER GETAUCHTER VORMAUERZIEGEL
BRIQUE ÉCOLOGIQUE DE PAREMENT TREMPÉ

(30) Priority: 12.10.2022 BE 202205824
(43) Date of publication of application: 24.04.2024
(73) Proprietor: Olivier BV, 8870 Izegem (BE)
(72) Inventor: Roussel, Mark, 8870 Izegem (BE)
(74) Representative: Brantsandpatents bv

(56) References cited:
- WO-A1-2013/016740
- US-A- 5 358 676
- US-A- 5 534 292
- US-A1- 2013 324 674

## Description

### TECHNICAL FIELD

The invention relates to a dipped concrete brick obtained by applying an aqueous sand and cement mixture in a mold, allowing it to harden into a formed brick after which the formed brick is dipped. The invention also relates in a second aspect to a method for making this dipped concrete brick. In another aspect, the invention also relates to a use of the dipped concrete brick as a facing brick.

### PRIOR ART

One of the most important environmental indicators is the CO₂ footprint, the main contributor to the carbon footprint is the manufacturing process of bricks, building blocks, shaped bricks and concrete building bricks. The use of additional cementitious materials has great potential for emission savings.

EP1108697 describes a method for producing a natural brick by mixing 87.5% by weight saturated "zavel", 9.0% by weight cement, 1.5% by weight straw and 2.0% by weight viscosity improver. This composition was pressed into 4x4x16 cm molds for 28 days, dried to an equilibrium moisture of 50%. It describes the method for obtaining a "zavel" brick, with a composition of "zavel," cement and water in near-balanced proportions. The surface treatment with cement is not mentioned.

JP2011/006308 describes a method of mixing cement, water and sodium aluminate in a vacuum mill. The mixed composition is then extruded. The desired brick length is then cut off. Alternatively, the use of molds is also described. The damp bricks are then allowed to air dry, preferably in the sun. After 28 days the bricks were ready for use. It describes the effect of the amount of cement in the composition on the strength of the resulting brick. Thus, a composition with less than 5% cement relative to the weight of the Kanto "zavel" results in a compressive strength lower than 1 MPa. It describes a method for obtaining a "zavel" brick, with a composition of "zavel," cement and water in near-balanced proportions.

EP1686109 describes the coating of a cement-based substrate with a cement-based coating, where the thickness of the coating is related to the porosity gradient through this coating. This coating improves porosity, water permeability and largely prevents the leaching of ions from the cementitious substrate. It does not describe a method for making a "zavel" brick. However, it does teach that the porosity and permeability of cementitious structural materials can be improved by providing a surface layer of cement.

US2002/009662 describes a phosphate-cement based composition that can be applied to cementitious building bricks and masonry walls, among other things. The coating shows good adhesion with, among other things, silicates and unstabilized cement. The coating improves surface waterproofing and porosity, enhances surface hardness and resistance to cracking, and improves thermal and acoustic insulation. It does not describe a method for making a "zavel" brick. However, it does teach that a cement-based surface treatment is suitable for bricks made from cement and clay, loam or "zavel" and also teaches that this surface treatment improves the porosity, permeability and hardness of the substrate.

CN104386989 describes building bricks with 70 to 85% construction waste, divided into fine pulverized material and coarse pulverized aggregate, 5 to 15% cement and saturated with water. The mixture is pressed into molds to form a brick. After demolding, the brick is sprayed with water for 28 days. Both Portland and "zavel' containing cement are used. It describes the process for obtaining a "zavel" brick, with a composition of pulverized building material, cement and water. The surface treatment with cement is not mentioned.

EP2105420 describes in Example 4 the mixing of 88 kg of fly ash, 10 kg of pulverized blast furnace slag and 2 liters of chemical activator based on hydroxyl, sulfate and acetate ions. This mixture is vibrated in a 230 mm by 110 mm by 80 mm mold. The result is then allowed to harden for 30 days. In this example, both curing under normal conditions and curing under heated conditions are tested separately. The method does not describe a composition according to the composition of the current method. Fly ash is used as the base material for the brick. Beyond that, however, a similar method is followed. In conclusion, the use of blast furnace slag as a replacement for Portland cement in the production of bricks is known.

WO2013/016740 describes a synthetic mineral brick comprising 65-87 wt% sand; 10-35 wt% cement; 0-3 wt% polymer additive and water.

US5534292 describes a method for improving the water repellency of a hydraulic material including the step of submerging the material in an aqueous lime bath.

These known compositions and methods are not suitable for creating an environmentally friendly, sustainable and ready-to-use brick where the CO₂ emissions remain as low as possible.

The present invention aims to solve at least some of the above problems or drawbacks. The aim of the invention is to provide a method which eliminates those disadvantages.

### SUMMARY OF THE INVENTION

In a first aspect, the present invention concerns a dipped concrete brick according to claim 1. The inventors have succeeded in developing an aqueous sand and cement mixture that is suitable for making an environmentally friendly and sustainable concrete brick so that CO₂ emissions remain as low as possible. The CO₂ emissions of this concrete brick are much lower than those of a traditional brick. The aqueous sand and cement mixture has the property that the formed concrete brick does not need to be fired, which eliminates the high CO₂ emissions from the kilns.

In a second aspect, the present invention relates to a method according to claim 6.

One of the advantages of this method is the increased porosity and permeability of the dipped concrete brick. Because of the finishing treatments, the dipped concrete brick will be water repellent and contamination will settle less quickly and less drastically.

In a third aspect, the invention relates to the use of a dipped concrete brick according to the first aspect, as a facing brick.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprises" and "contains" are synonyms and are inclusive or open-ended terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

The expression "%mass" in this document refers to the relative weight of a component based on the total weight of the entire product being referenced.

The term "impregnation" as described in this document refers to permeating a material with another substance. This is also referred to as "hydrophobizing." The ultimate goal is to try to prevent problems resulting from the absorption of moisture and dirt. This means that the quality of the impregnated material can be guaranteed for a longer period of time. Using this technique, the following properties can be given to that material: water-repellent, water-resistant, mold-resistant, fire-retardant, graffiti-resistant.

The term "lutite content" in this document refers to the designation for soil particles that are smaller than 2 µm. The lutite particles consist of flat plates that sit on top of each other. These particles have a negative ionic charge. Due to the negative charge of the clay fraction, the soil is able to bind positive ions of minerals dissolved in the soil water to the clay fraction. As a result, the minerals do not wash away with the groundwater, but remain bound to the clay particles and can thus be absorbed by the plants. A lutite content of 8% mass to 12% mass is referred to as very light "zavel" [*in Dutch: zeer lichte zavel*], a lutite content of 12% mass to 17.5% mass is considered medium light "zavel" [*in Dutch: matig lichte zavel*] and a lutite content of 17.5% mass to 25% mass is considered heavy "zavel" [*in Dutch: zware zavel*]*.* If the lutite content is greater than 25%, this is referred to as clay, with a lutite content of 25% mass to 35% mass, it is referred to as light clay, with 35% mass to 50% mass as moderate clay and with more than 50% mass, heavy clay. Lutite influences the workability, structure and moisture retention capacity of the soil.

The term "limewash" [*Dutch source term: kalei*] refers in this document to a mixture that includes sand, lime and water. The lime plaster includes the following elements: white cement, hydraulic lime, washed chalk, mineral dyes, moisture-proofing products and additives for making the limewash dust-free.

In a first aspect, the invention concerns a dipped concrete brick according to claim 1.

The brick is formed of a starting composition, wherein this composition comprises sand, water and cement. What is special about this invention is that the sand is as pure as possible. The invention seeks to obtain a durable, ecological concrete brick. One of the most important environmental indicators is the CO₂ footprint is, the main contributor to the CO₂ footprint is the manufacturing process of bricks, building blocks, shaped bricks and concrete building bricks, the application of additional cementitious materials has great potential for emission savings.

A traditional brick is a clay product and includes various flake layers with water in between. Before the clay can be used to make bricks, stones and any metal parts are removed from the clay. The clay is then kneaded and ground. The kneading and grinding and the addition of water and steam are intended to make the clay mass homogeneous and give it the plasticity necessary for forming the bricks. Before the shaped bricks go into the kiln to be fired, they must first lose a significant portion of the water that the clay still contains. Otherwise there would be a danger that the bricks would crack during firing. After being dried, the shaped bricks are fired. When firing, it is important that the temperature does not rise too quickly, otherwise the outside of the bricks may already be baked and the inside not, causing the bricks to become convex or even crack due to overpressure. Both bringing it to baking temperature and then cooling it down should not be done too quickly. During firing, the sand grains in the clay vitrify, creating a hard brick. Production is a very long, energy-intensive and unsustainable process with significant CO₂ emissions. The average CO₂ emissions from the brick production process are 28.14 kg/m². Estimates suggest that brick and cementation production is responsible for 7 to 8% of global CO₂ emissions. The baking and drying process therefore has a relatively large environmental impact.

The concrete brick described in this invention addresses this problem by having the aqueous sand and cement mixture in a certain ratio so that it does not have to undergo the baking process. By carrying out a dipping operation and any post-processing, a strong, environmentally friendly dipped concrete brick can be obtained. The entire process of forming this dipped concrete brick produces a total CO₂ emission of preferably less than 10.1 kg/m². Comparing the CO₂ emissions of these two products shows that the non-fired dipped concrete brick has a CO₂ reduction of at least 60%, preferably 62% and in particular 64%.

According to the invention, the brick is formed by applying an aqueous sand and cement mixture in a mold and then dried. The mixture comprises more than 70% by mass of sand and less than 20% by mass of cement, and with the sand having a lutite content of less than 0.5% mass. The formed brick is dipped in a dipping solution, which substantially comprises lime, after drying. Preferably, the remainder is substantially water. Preferably, the aqueous sand and cement mixture comprises more than 80% by mass of sand. According to a preferred embodiment, the starting composition comprises 81.5% by mass of sand, 12.8% by mass of cement and 5.7% by mass of water.

The cement comprises a Portland limestone cement containing the main components Portland clinker and limestone. The cement has the following special properties: it is a white cement with high clarity, good workability of fresh mortar and normal hardening and compressive strength. These properties make the cement particularly suitable for making colored products based on cement.

The sand has a D50 value between 100 µm and 335 µm, more preferably between 125 µm and 310 µm and most preferably between 150 µm and 285 µm. Dₓ is the calculated diameter of a sieve on which x %mass of the weight of a granular rock would remain. The D50 is the calculated diameter of a sieve on which 50% mass of a granular rock would remain, in other words it is a calculated sieve size, where 50% mass of a dry sand sample passes the sieve. The D50 is also called the sand median and this value is used as an indication of median grain size and is often the most important characteristic of a sand sample. This parameter is a determining parameter in the permeability, sand that is too fine will reduce the permeability. The following classification of soil type can be made based on the grain size:
- smaller than 2 µm: lutite;
- from 2 µm to 63 µm: loam;
- from 63 µm to 2000 µm: sand; and
- larger than 2000 µm: gravel.

The lutite content refers to particles smaller than 2 µm, these particles will reduce permeability. The invention is special because it creates a concrete brick by using very pure sand in the starting composition, in other words by keeping the lutite content as small as possible, so that the permeability will not be negatively affected. The sand from the invention is characterized in that it has a lutite content of less than 0.5% by mass, preferably less than 0.3% by mass, in particular less than 0.1% by mass.

The dipping operation consists of applying a dipping solution. The dipping solution consists mainly of lime, preferably a lime plaster comprising cement, lime, chalk, dyes, moisture-proofing products and additives. This dipping operation will have a positive influence on the quality of the concrete brick. Lime has a high chemical resistance and a lower compressive strength, which translates into fewer built-up stresses and a certain flexibility and suppleness in the underlying structure of a building. On the one hand, the lime of the dipping solution forms a good protective layer against moisture and other influences, on the other hand it also adds an aesthetic element. The dipping solution comprises fine "limewash" [*Dutch source term: kalei*], also called mineral cement paint, and has the special property that the *kalei* has low-dust technology for greater working comfort and ease of use; among other things, less dust will enter the lungs during mixing of the *kalei.*

A further advantage of immersing in the dipping solution is that a vapor-open system is obtained so that the facade can still breathe. Due to the vapor-open structure, the dipping solution, which consists mainly of lime, is less sensitive to light salt loads in the subsurface and also ensures better moisture management in the walls, the moisture can evaporate from the walls and does not remain behind a waterproof layer. Lime therefore has a capillary effect; it draws moisture from the subsurface so that the walls do not remain wet for longer than necessary after a rain shower. In addition, it also protects the jointing of the wall.

The average gross dry density, also called volumetric mass density, of the dipped concrete brick is between 1400 kg/m³ and 1900 kg/m³, preferably between 1500 kg/m³ and 1800 kg/m³, in particular between 1600 kg/m³ and 1700 kg/m³. The volumetric mass shows the relationship between mass and volume, reflects the degree of compactness of the material and allows the mass of a given volume to be estimated. The moisture content and composition of the material largely determine the density. The concrete building bricks belong to one of the following density classes, with ρ the gross dry density of the brick and indication of the gross dry density class, the density classes being:
- ρ 0.6: ρ ≤ 600 kg/m³;
- ρ 0.7: 600 kg/m³ < ρ ≤ 700 kg/m³;
- ρ 0.8: 700 kg/m³ < ρ ≤ 800 kg/m³;
- ρ 0.9: 800 kg/m³ < ρ ≤ 900 kg/m³;
- ρ 1.0: 900 kg/m³ < ρ ≤ 1,000 kg/m³;
- ρ 1.2: 1,000 kg/m³ < ρ ≤ 1,200 kg/m³;
- ρ 1.4: 1,200 kg/m³ < ρ ≤ 1,400 kg/m³;
- ρ 1.6: 1,400 kg/m³ < ρ ≤ 1,600 kg/m³;
- ρ 1.9: 1,600 kg/m³ < ρ ≤ 1,900 kg/m³;
- ρ 2.2: 1,900 kg/m³ <ρ ≤ 2,200 kg/m³; and
- ρ 2.2: + 2,200 kg/m³ < ρ.

The dipped concrete brick preferably belongs to class p1.9 or p1.6.

The concrete compressive strength of the dipped concrete brick is the extent to which concrete can resist compressive forces. The concrete compressive strength depends on the binder used, preferably cement, the aggregate used, preferably sand, the amount of water used and the curing time. The compressive strength of concrete determines the load-bearing capacity of a structure and is one of the most important mechanical properties. The concrete bricks belong to one of the following compressive strength classes, with fb as the minimum normalized average compressive strength:
- f40: fb ≥ 40 N/mm²;
- f35: fb ≥ 35 N/mm²;
- f30: fb ≥ 30 N/mm²;
- f25: fb ≥ 25 N/mm²;
- f20: fb ≥ 20 N/mm²;
- f15: fb ≥ 15 N/mm²;
- f12: fb ≥ 12 N/mm²;
- f10: fb ≥ 10 N/mm²;
- f8: fb ≥ 8 N/mm²;
- f7: fb ≥ 7 N/mm²;
- f6: fb ≥ 6 N/mm²;
- f5: fb ≥ 5 N/mm²;
- f4: fb ≥ 4 N/mm²;
- f3: fb ≥ 3 N/mm²; and
- f2: fb ≥ 2 N/mm².

The normalized average compressive strength of the concrete brick is greater than 6 N/mm², preferably greater than 8 N/mm², in particular greater than 10 N/mm². As a result, the dipped concrete brick will preferably belong to category f8.

The moisture behavior of the dipped concrete brick relates to shrinkage/swelling. The shrinkage behavior comprises the control and prevention of crack formation, therefore the dipped concrete brick will have a moisture behavior that is less than 0.55 mm/m, preferably less than 0.50 mm/m, in particular less than 0.45 mm/m. The water absorption is less than 8.00 g/m²s, preferably less than 7.00 g/m²s, in particular less than 6.00 g/m²s. These are two important parameters because too much water is detrimental to pressure resistance and durability. An excess of water produces a more porous dipped concrete brick through which aggressive substances and moisture penetrate. Therefore, the resulting dipped concrete brick is ideal because the water content is kept to an absolute minimum, so that the dipped concrete brick can dry naturally and includes less negative effects that a high water content entails such as cracking of the dipped concrete brick.

In a further embodiment, the dipped concrete brick is suitable for impregnation. By treating the dipped concrete bricks with a special, environmentally friendly liquid, they become water repellent. At least one side, preferably a visible side, of the brick will receive a water-repellent layer. An impregnated dipped concrete brick has exactly the same pore structure as a non-impregnated dipped concrete brick. The number and size of pores remain the same. However, the impregnated layer will no longer absorb liquids. This is because the pore walls receive a water-repellent layer, so the water droplets are no longer attracted to the walls and thus do not migrate inward. External contamination, such as soot, dust or green deposits, is less likely to adhere to the water-repellent surface of the brick. The dirt will therefore rinse off faster and easier in rainy weather. Impregnating the dipped concrete masonry ensures that the contamination settles less quickly and less drastically. Because the pores remain open, the high frost resistance of the dipped concrete brick is retained. Moisture that is in the core of the dipped concrete brick can leave the dipped concrete brick via the non-impregnated laying sides. But also via evaporation along the impregnated visible sides of the dipped concrete brick. Because the vapor droplets are smaller than water droplets and can easily pass through the impregnated pores.

The dipped concrete brick will have a BENOR label. The measurements of the properties mentioned above are made according to the classification of the BENOR requirements and can be found in the following types of reference specifications that form the technical basis of the BENOR label for concrete products: a European product standard (NBN EN), a Belgian product standard (NBN) and Technical Requirements (Technische Voorschriften, PTV), more specifically BENOR concrete is concrete according to the European standard NBN-EN 206 and the supplement NBN B 15-001. BENOR concrete has basic requirements relating to the following properties found in the aforementioned documents: the compressive strength class, the durability which includes the used domain and the environmental class, the consistency class and the nominal maximum grain size.

The BENOR label is a voluntary quality label. It gives the user confidence in the compliance of a product, process or service with the applicable regulations. It is a quality label because it guarantees that the certified product, process or service meets well-defined quality requirements. It is a voluntary label because it is supported by the market and not imposed by legislation. The BENOR label can be applied when the parties voluntarily agree to this. Being a bearer of the BENOR label means that the control that the manufacturer carries out on production is verified by a third party. The BENOR mark is therefore synonymous with the guarantee that the concrete meets the specified basic properties and prescribed additional requirements. The user therefore no longer needs to check the conformity of the concrete with the requirements themselves. The BENOR mark therefore saves time and reduces costs.

In a subsequent aspect, the invention concerns a method for manufacturing a dipped concrete brick. First, an aqueous sand and cement mixture is formed that comprises more than 70% by mass of sand and less than 20% by weight of cement, in particular more than 80% of sand and that the sand has a lutite content of less than 0.5% by mass, preferably less than 0.3% mass, in particular less than 0.1% mass. Then follows forming a concrete brick in a mold, after which this concrete brick will be dried at room temperature or lower, after which the dried concrete brick is demolded. The dried concrete brick has a high porosity, which will ensure that the dipping solution can be absorbed into the pores so that the effect of the dipping is maximized. This dried concrete brick is then immersed in a dipping solution, which dipping solution mainly comprises lime. This dipped concrete brick must be further dried at room temperature or lower, after which an impregnating agent can optionally be applied to the visible sides of the dipped concrete brick. The time that the aqueous sand and cement mixture is in the mold is kept to a minimum. The resulting dipped concrete brick has high porosity, improved permeability and durability.

By forming the aqueous sand and cement mixture in the mold, the concrete brick takes on the outer dimensions of the mold. This gives the concrete brick a rectangular appearance with preferred dimensions, in the form of length x width x height, of 210x50x80 mm, 240x80x40 mm or 240x40x80 mm.

## Claims

1. A dipped concrete brick obtained by applying an aqueous sand and cement mixture in a mold, allowing it to harden into a formed brick, after which the formed brick is dipped, wherein the dipping operation consists of immersing the concrete brick in a dipping solution, which dipping solution substantially comprises lime, wherein the aqueous sand and cement mixture comprises more than 70% by mass of sand and less than 20% by mass of cement, **characterized in that** the sand has a lutite content of less than 0.5% mass.

2. The dipped concrete brick according to claim 1, **characterized in that** the aqueous sand and cement mixture comprises more than 80% by mass of sand.

3. The dipped concrete brick according to any of the preceding claims 1-2, **characterized in that** the sand has a D50 value between 100 µm and 335 µm, wherein the D50 value is the calculated diameter of a sieve on which 50% mass of a granular rock would remain.

4. The dipped concrete brick according to any of the preceding claims 1-3, **characterized in that** the dipping operation consists of immersing the concrete brick in a lime plaster comprising cement, lime, chalk, dyes, moisture-proofing products and additives.

5. The dipped concrete brick according to any of the preceding claims 1-4, **characterized in that** the dipped concrete brick has a normalized average compressive strength greater than 6 N/mm².

6. A method of manufacturing a dipped concrete brick, comprising:
(a) forming an aqueous sand and cement mixture that comprises more than 70% by mass of sand and less than 20% by weight of cement, in particular more than 80% of sand and that the sand has a lutite content of less than 0.5% by mass;
(b) forming a concrete brick in a mold;
(c) drying this concrete brick at room temperature or lower, after which the dried concrete brick is demolded;
(d) immersing this dried concrete brick in a dipping solution, which dipping solution substantially comprises lime; and
(e) further drying this dipped concrete brick at room temperature or lower.

7. Use of the dipped concrete brick according to any of claims 1-5 as a facing brick.

## Patentansprüche

1. Getauchter Betonziegel, erhalten durch Einbringen einer wässrigen Sand-Zement-Mischung in eine Form, Härten-Lassen zu einem geformten Ziegel, wonach der geformte Ziegel getaucht wird, wobei der Tauchvorgang aus einem Eintauchen des Betonziegels in eine Tauchlösung besteht, wobei die Tauchlösung im Wesentlichen Kalk umfasst , wobei die wässrige Sand-Zement-Mischung mehr als 70 Masse-% Sand und weniger als 20 Masse-% Zement umfasst, **dadurch gekennzeichnet, dass** der Sand einen LutitGehalt von weniger als 0.5 Masse-% aufweist.

2. Getauchter Betonziegel nach Anspruch 1, **dadurch gekennzeichnet, dass** die wässrige Sand-Zement-Mischung mehr als 80 Masse-% Sand umfasst.

3. Getauchter Betonziegel nach einem der vorhergehenden Ansprüche 1-2, **dadurch gekennzeichnet, dass** der Sand einen D50-Wert zwischen 100 µm und 335 µm aufweist, wobei der D50 Wert der berechnete Durchmesser eines Siebes ist, auf dem 50 Masse-% eines körnigen Gesteins zurückbleiben würden.

4. Getauchter Betonziegel nach einem der vorhergehenden Ansprüche 1-3, **dadurch gekennzeichnet, dass** der Tauchvorgang aus einem Eintauchen des Betonziegels in einen Kalkputz besteht, der Zement, Kalk, Kreide, Farbstoffe, Feuchtigkeitsschutzprodukte und Additive umfasst.

5. Getauchter Betonziegel nach einem der vorhergehenden Ansprüche 1-4, **dadurch gekennzeichnet, dass** der getauchte Betonziegel eine normalisierte mittlere Druckbeständigkeit von mehr als 6 N/mm² aufweist.

6. Verfahren zur Herstellung eines getauchten Betonziegels, Folgendes umfassend:
(a) Bilden einer wässrigen Sand-Zement-Mischung, die mehr als 70 Masse-% Sand und weniger als 20 Gewichts-% Zement umfasst, insbesondere mehr als 80 Masse-% Sand, und dass der Sand einen Lutitgehalt von weniger als 0.5 Masse-% aufweist,
(b) Bilden eines Betonziegels in einer Form,
(c) Trocknen des Betonziegels bei Raumtemperatur oder darunter, wonach der getrocknete Betonziegel entformt wird,
(d) Eintauchen des getrockneten Betonziegels in eine Tauchlösung, wobei die Tauchlösung im Wesentlichen Kalk umfasst, und
(e) weiteres Trocknen des getauchten Betonziegels bei Raumtemperatur oder darunter.

7. Verwendung des getauchten Betonziegels nach einem der Ansprüche 1-5 als Verblendziegel.

## Revendications

1. Brique en béton trempée obtenue en appliquant un mélange aqueux de sable et de ciment dans un moule, en le laissant durcir jusqu'à obtention d'une brique formée, après quoi la brique formée est trempée, dans laquelle l'opération de trempage consiste à immerger la brique en béton dans une solution de trempage, laquelle solution de trempage comprend essentiellement de la chaux, dans laquelle le mélange aqueux de sable et de ciment comprend plus de 70% en masse de sable et moins de 20% en masse de ciment, **caractérisée en ce que** le sable a une teneur en lutite inférieure à 0.5% en masse.

2. Brique en béton trempée selon la revendication 1, **caractérisée en ce que** le mélange aqueux de sable et de ciment comprend plus de 80% en masse de sable.

3. Brique en béton trempée selon l'une quelconque des revendications précédentes 1-2, **caractérisée en ce que** le sable a une valeur D50 comprise entre 100 µm et 335 µm, la valeur D50 étant le diamètre calculé d'un tamis sur lequel resterait 50% de la masse d'une roche granulaire.

4. Brique en béton trempée selon l'une quelconque des revendications précédentes 1-3, **caractérisée en ce que** l'opération de trempage consiste à immerger la brique en béton dans un enduit à la chaux comprenant du ciment, de la chaux, de la craie, des colorants, des produits hydrofuges et des additifs.

5. Brique en béton trempée selon l'une quelconque des revendications précédentes 1-4, **caractérisée en ce que** la brique en béton trempée a une résistance à la compression moyenne normalisée supérieure à 6 N/mm².

6. Procédé de fabrication d'une brique en béton trempée, comprenant :
(a) la formation d'un mélange aqueux de sable et de ciment qui comprend plus de 70% en masse de sable et moins de 20% en masse de ciment, notamment plus de 80% de sable et le sable présente une teneur en lutite inférieure à 0.5% en masse ;
(b) la formation d'une brique en béton dans un moule ;
(c) le séchage de cette brique en béton à température ambiante ou inférieure, après quoi la brique en béton séchée est démoulée ;
(d) l'immersion de cette brique en béton séchée dans une solution de trempage, laquelle solution de trempage comprend essentiellement de la chaux ; et
(e) la poursuite du séchage de cette brique en béton trempée à température ambiante ou inférieure.

7. Utilisation de la brique en béton trempée selon l'une quelconque des revendications 1-5 comme brique de parement.
